# EUROPÄISCHE PATENTSCHRIFT

(11) **EP 4 498 809 B1**
(45) Veröffentlichungstag und Bekanntmachung des Hinweises auf die Patenterteilung: **29.04.2026**
(21) Anmeldenummer: 23716167.4
(22) Anmeldetag: 30.03.2023
(51) Int. Cl.: A01M 29/08

(54) **FOLIENPRODUKT ZUR ANBRINGUNG AN EINER GEBÄUDEHÜLLE ZUM SCHUTZ GEGEN VOGELSCHLAG**
FILM PRODUCT FOR APPLICATION TO A BUILDING ENVELOPE FOR PROTECTION AGAINST BIRD IMPACT
PRODUIT DE FILM DESTINÉ À ÊTRE APPLIQUÉ SUR UNE ENVELOPPE DE BÂTIMENT POUR UNE PROTECTION CONTRE LES IMPACTS D'OISEAUX

(30) Priorität: 31.03.2022 AT 892022
(43) Veröffentlichungstag der Anmeldung: 05.02.2025
(73) Patentinhaber: Birdshades Innovations GmbH, 8700 Leoben (AT)
(72) Erfinder: CERNY, Christoph, 8047 Graz (AT); WADDOUP, Dominique, 8047 Graz (AT)
(74) Vertreter: Mathys & Squire
(86) Internationale Anmeldenummer: PCT/AT2023/060105
(87) Internationale Veröffentlichungsnummer: WO 2023/183957

(56) Entgegenhaltungen:
- US-A1- 2005 284 411
- US-A1- 2013 003 208
- US-A1- 2016 137 850

## Beschreibung

Die vorliegende Erfindung betrifft ein Folienprodukt zur Anbringung an einer Gebäudehülle zum Schutz gegen Vogelschlag, ein Verfahren für eine Anbringung eines solchen Folienproduktes sowie ein Fassadenelement mit einem solchen Folienprodukt.

Es ist bekannt, dass bei transparenten Teilabschnitten von Gebäudehüllen die Gefahr eines sogenannten Vogelschlages besteht. Darunter ist zu verstehen, dass Vögel im Flug diesen transparenten Teilabschnitt der Gebäudehülle nicht oder zu spät als Hindernis wahrnehmen und entsprechend gegen diesen transparenten Teilabschnitt fliegen. Dies führt häufig zu Verletzungen oder sogar zum Verenden des Vogels.

Es ist weiter bekannt, dass Folienprodukte auf der Gebäudehülle angewendet werden, welche den Vögeln helfen, diese transparenten Teilabschnitte als Hindernis wahrzunehmen. Neben bekannten Lösungen im für den Menschen sichtbaren VIS-Bereich (visible) wirkenden Vogelschutzfunktionen sind auch sogenannte UV-Vogelschutzabschnitte im Einsatz, die ihre Wirkung im UV-Bereich erzielen. Darunter ist zu verstehen, dass UV-Vogelschutzabschnitte, eine zu anderen Abschnitten eines Folienprodukts unterschiedliche optische Wirkung im UV-Bereich aufweisen, zum Beispiel mit erhöhter oder reduzierter Absorption oder anderem Reflexionsverhalten. Dadurch, dass eine Vielzahl von Vogelarten in der Lage ist, im UV-Bereich solche Unterschiede wahrzunehmen, kann eine gegen Vogelschlag schützende Wirkung durch die geometrische Ausgestaltung der UV-Vogelschutzabschnitte gewährleistet werden. Relevanten Stand der Technik bilden bspw. auch: US 2013/003208 A1, US 2005/284411 A1, US 2016/137850 A1.

Nachteilhaft bei den bekannten Lösungen ist es, dass die UV-Vogelschutzfunktion durch ihre Wirkung im UV-Bereich vom Menschen nicht wahrgenommen werden kann. Während diese fehlende Wahrnehmbarkeit im VIS-Bereich für den Menschen von Vorteil ist, wenn das Folienprodukt angebracht worden ist, führt dies jedoch zu einer erschwerten Montagesituation. So ist durch die Unsichtbarkeit des UV-Vogelschutzabschnitts für den Monteur nicht ersichtlich, an welcher Position und/oder mit welcher Ausrichtung der UV-Vogelschutzabschnitt auf dem Folienkörper angeordnet ist. Da jedoch die UV-Vogelschutzfunktion ihre Wirkung durch die geometrische Korrelation zur Gebäudehülle und/oder durch die geometrische Korrelation zu anderen UV-Vogelschutzabschnitten der gleichen und/oder eines anderen Folienkörpers mit sich bringt, ist die Ausrichtung des Folienproduktes und die damit zusammenhängende Ausrichtung des UV-Vogelschutzabschnitts von wesentlicher Bedeutung für die Funktionssicherheit im Schutz gegen Vogelschlag.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine bessere Wirkung mittels UV-Vogelschutzabschnitten zu erzielen und gleichzeitig eine erleichterte Montierbarkeit zu schaffen.

Die voranstehende Aufgabe wird gelöst, durch ein Folienprodukt mit den Merkmalen des Anspruchs 1, ein Verfahren mit den Merkmalen des Anspruchs 13 sowie ein Fassadenelement mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Folienprodukt beschrieben sind, selbstverständlich auch im Zusammenhang mit dem erfindungsgemäßen Verfahren sowie dem erfindungsgemäßen Fassadenelement und jeweils umgekehrt, sodass bezüglich der Offenbarung zu den einzelnen Erfindungsaspekten stets wechselseitig Bezug genommen wird beziehungsweise werden kann.

Der erfindungsgemäße Kerngedanke liegt darin, dass ein Folienprodukt zur Anbringung an einer Gebäudehülle insbesondere einem transparenten Teilabschnitt der Gebäudehülle, zum Schutz gegen Vogelschlag verwendet werden kann. Dieses Folienprodukt weist einen Folienkörper mit einer flächigen Erstreckung auf. Der Folienkörper ist mit wenigstens einem UV-Vogelschutzabschnitt ausgestattet, mit einer optischen Wirkung im UV-Bereich als UV-Vogelschutzfunktion. Der UV-Vogelschutzabschnitt weist, bezogen auf den Folienkörper, eine Vogelschutzposition auf. Weiter ist wenigstens eine Montagemarkierung mit einer optischen Wirkung im für den Menschen sichtbaren VIS-Bereich vorgesehen. Diese Montagemarkierung ist mit wenigstens einem Ausrichtungsabschnitt ausgestattet, welcher die Vogelschutzposition von wenigstens einem UV-Vogelschutzabschnitt im VIS-Bereich anzeigt.

Unter einer Gebäudehülle kann dabei jede Materialart verstanden werden, insbesondere solche, welche reflektierend und/oder transparent sind. Dabei kann es sich beispielsweise um Glasfläche, Kunststoffflächen und/oder Metallflächen handeln.

Die Anbringung des Folienprodukts kann dabei sowohl auf der Oberfläche der Gebäudehülle und/oder in das Material der Gebäudehülle eingebettet erfolgen. So ist zum Beispiel ein mehrschichtiges Material denkbar, in welchem das Folienprodukt, insbesondere ein Folienkörper des Folienprodukts, eine oder mehrere der Schichten ausbildet. Auch eine gemeinsame Ausbildung mit dem Material der Gebäudehülle, beispielsweise durch Koextrusion ist hier denkbar.

Ein Folienprodukt kann im Sinne der vorliegenden Anmeldung unterschiedliche Ausgestaltungen aufweisen. So ist beispielsweise eine mehrschichtige Ausbildung für den Folienkörper denkbar. Auch einfachere, insbesondere einschichtige Folienkörper sind jedoch möglich. Selbstverständlich ist auch eine komplexere Ausbildung mit unterschiedlichen Teilabschnitten, welche aneinander angrenzen, im Sinne der vorliegenden Erfindung als Folienprodukt zu verstehen.

Der erfindungsgemäße Kerngedanke beruht darauf, eine für den Menschen unsichtbare Vogelschutzfunktion mithilfe eines Folienprodukts an einem transparenten Teilabschnitt einer Gebäudehülle anzubringen. Dabei ist unerheblich, ob das Folienprodukt nachträglich an die Gebäudehülle angebracht wird, oder bereits im Vormontageprozess oder sogar im Fertigungsprozess des Teilabschnitts, insbesondere des später noch erläuterten Fassadenelementes, in dieses eingebracht wird.

Das erfindungsgemäße Folienprodukt bringt zur Ausbildung der Vogelschutzfunktion wenigstens einen UV-Vogelschutzabschnitt mit sich. Der UV-Vogelschutzabschnitt weist eine optische Wirkung im UV-Bereich und damit im für den Menschen nicht sichtbaren Bereich auf. Die Schutzwirkung kann zum Beispiel durch geometrische Formen erzielt werden. So können beispielsweise Streifenmuster, Gittermuster, Rastermuster, Punktmuster, aber auch andere, komplexere geometrische Formen, den einen oder mehrere UV-Vogelschutzabschnitt zur Verfügung stellen. Im Rahmen dieser Offenbarung wird ein besonders einfaches Beispiel gewählt, um die Funktionalität näher zu beschreiben. Dabei handelt es sich um ein streifenförmiges Muster mit UV-Vogelschutzabschnitten, welche entweder mit freien Bereichen oder mit anderen UV-Vogelschutzabschnitten mit anderer optischer Wirkung im UV-Bereich abwechseln. Die vorliegende Erfindung ist jedoch keinesfalls auf dieses einfache Ausführungsbeispiel beschränkt, sondern unabhängig von der tatsächlichen Positionierung, Ausformung und/oder Ausrichtung der einzelnen UV-Vogelschutzabschnitte.

Im genannten Beispiel können mehrere streifenförmige UV-Vogelschutzabschnitte parallel zueinander, direkt nebeneinander oder in einem Raster voneinander entfernt in dem Folienkörper ausgebildet sein. Für den Vogel mit einer Wahrnehmungsmöglichkeit im UV-Bereich bildet sich damit eine streifenförmige Barriere aus, welche er wie eine Anordnung von Gitterstäben wahrnimmt. Je nach Größe des Vogels führt dies dazu, dass er die freibleibenden Streifen zwischen den UV-Vogelschutzabschnitten zwar als Freiraum wahrnehmen kann, welcher allerdings vorzugsweise so eng ist, dass er diesen nicht als Flugschneise wählt. Mit anderen Worten bildet bei dieser Ausführungsform der UV-Vogelschutzabschnitt ein Vogelschutzgitter mit, welches der im UV-Bereich wahrnehmende Vogel sehen kann, und gleichzeitig eine Unsichtbarkeit dieses Gitters für den Menschen gegeben ist.

Hier ist auch gut ersichtlich, dass es dabei darauf ankommt, in welcher Ausrichtung und Positionierung das Folienprodukt und damit des wenigstens einen UV-Vogelschutzabschnitts tatsächlich auf der Gebäudehülle angebracht wird. Handelt es sich bei der Gebäudehülle zum Beispiel um eine verglaste Fassade, so müssen mehrere Folienprodukte nebeneinander angebracht werden. Insbesondere in diesem Fall ist es notwendig, dass direkt aneinander angrenzende Folienprodukte beispielsweise das erläuterte Streifenmuster in einer Art und Weise fortsetzen, dass die geometrische Wirkung in der Korrelation der streifenförmigen UV-Vogelschutzabschnitte zueinander auch beim Aneinandergrenzen mehrere Folienprodukte beibehalten wird. Dies ist nur dann gegeben, wenn die Ausrichtung der Folienprodukte zueinander einer vorgegebenen und gewünschten Form entspricht. Jedoch kann der Monteur beim Anbringen des Folienproduktes nicht erkennen, in welcher Positionierung und/oder Ausrichtung die UV-Vogelschutzabschnitte angeordnet sind, da sie gemäß ihrer Funktionalität vom Menschen eben gerade nicht erkennbar sind.

In der Montagesituation, wie sie hier erläutert wird, treten die erfindungsgemäßen Vorteile zu Tage. So wird für den Monteur zwar nicht der wenigstens eine UV-Vogelschutzabschnitt erkennbar sein, jedoch kann er die im VIS-Bereich sichtbare Montagemarkierung sehen. Die Montagemarkierung weist dabei zumindest einen Ausrichtungsabschnitt auf, welcher eine Anzeige für die Vogelschutzposition enthält. Die Anzeige der Ausrichtung der Vogelschutzposition kann dabei in unterschiedlichster Weise erfolgen. Neben einer indirekten, zum Beispiel informativen Anzeige, wie beispielsweise einer Beschriftung, einer Pfeildarstellung oder Ähnlichem, ist es auch möglich, dass die reine Positionierung des Ausrichtungsabschnitts bereits den Hinweis auf die richtige Ausrichtung des Folienprodukts für eine richtige und korrekte Ausrichtung der UV-Vogelschutzabschnitte mit sich bringt. Auch eine direkte Anzeige, zum Beispiel durch Überlappung oder teilweise Überlappung der Montagemarkierung mit dem wenigstens einen UV-Vogelschutzabschnitt ist im Rahmen der vorliegenden Erfindung denkbar. Ein Ausrichtungsabschnitt kann also eine implizite oder eine explizite Anzeigemöglichkeit für die Vogelschutzposition mit sich bringen.

Es ist auch noch darauf hinzuweisen, dass eine Vogelschutzposition im Sinne der vorliegenden Erfindung mit der gewünschten Schutzfunktion und der damit einhergehenden geometrischen Ausgestaltung des wenigstens einen UV-Vogelschutzabschnitts einhergeht. So kann die Vogelschutzposition die tatsächliche Relativpositionierung eines UV-Vogelschutzabschnitts zum Rand des Folienkörpers beinhalten. Auch kann die Vogelschutzposition eine Relativposition zwischen zwei UV-Vogelschutzabschnitten ausweisen. Selbstverständlich sind auch komplexere Zusammenhänge hinsichtlich Positionierung und Ausrichtung im Rahmen der vorliegenden Erfindung als Vogelschutzposition zu verstehen.

Durch ein erfindungsgemäßes Folienprodukt wird es nun möglich, dass bei der Montage des Folienprodukts an der Gebäudehülle im visuellen Bereich sichtbare Montagemarkierungen vom Monteur erkennbar sind, welche es erlauben, mit hoher Sicherheit das Folienprodukt in einer Art und Weise und vor allem in einer Ausrichtung anzubringen, dass die für den Monteur nicht sichtbaren UV-Vogelschutzabschnitte mit der gewünschten Ausrichtung an der Gebäudehülle platziert sind. Eine Fehlmontage, insbesondere mehrerer Folienprodukte nebeneinander, kann auf diese Weise mit hoher Sicherheit ausgeschlossen werden.

Eine weitere Montagesituation, in welcher eine Ausrichtung durch die erfindungsgemäße Ausbildung erleichtert wird, ist eine beidseitige Anbringung auf einem transparenten Teilabschnitt einer Gebäudehülle. Dabei kann es sich zum Beispiel um eine Glastrennwand bei einer Bushaltestelle handeln, welche beidseitig von Vögeln angeflogen werden kann. Die beidseitige Anbringung erzeugt auf beiden Seiten die gewünschte Schutzwirkung in identischer Weise. Dabei muss jedoch auf eine deckungsgleiche Ausrichtung der UV-Vogelschutzabschnitte geachtet werden. Mit anderen Worten müssen sich die, zum Beispiel streifenförmigen, UV-Vogelschutzabschnitte auf beiden Seiten der Glastrennwand an identischen und damit deckungsgleichen Positionen befinden. Andernfalls bestünde die Gefahr, dass sich die beidseitigen UV-Vogelschutzabschnitte ergänzen und damit die Schutzfunktion beeinträchtigen oder sogar auflösen.

Vorteile kann es mit sich bringen, wenn bei einem erfindungsgemäßen Folienprodukt der Ausrichtungsabschnitt eine Ausrichtung und/oder eine Position aufweist, welche mit der Ausrichtung des wenigstens einen UV-Vogelschutzabschnitts korreliert, insbesondere entlang der Ausrichtung des wenigstens einen UV-Vogelschutzabschnitts ausgerichtet ist und/oder zumindest teilweise mit der Vogelschutzposition übereinstimmt. Hier sind unterschiedliche Ausführungsformen des Ausrichtungsabschnitts erläutert. Insbesondere handelt es sich hier um eine direkte Anzeige der Schutzfunktion, wobei in einfachster Weise direkt der eine oder mehrere Teilabschnitt(e) des UV-Vogelschutzabschnitts einfach durch den Ausrichtungsabschnitt abgedeckt und damit wiedergegeben sind. Um jedoch eine Sichtbarkeit der UV-Vogelschutzabschnitte weitestgehend zu reduzieren oder sogar zu minimieren, wird vorzugsweise der Ausrichtungsabschnitt deutlich kleiner ausgebildet sein als der wenigstens eine Vogelschutzabschnitt. Auch unterschiedliche Ausrichtungsabschnittarten sind miteinander im Rahmen der vorliegenden Erfindung kombinierbar. Die Positionierung und/oder die Ausrichtung kann insbesondere auch einen später noch erläuterten informativen Charakter mit sich bringen, um diese Ausrichtungsinformationen anzuzeigen.

Ein weiterer Vorteil ist erzielbar, wenn bei einem erfindungsgemäßen Folienprodukt der wenigstens eine Ausrichtungsabschnitt einen Informationsabschnitt aufweist, welcher eine visuelle Information über die Vogelschutzposition aufweist. Während der Ausrichtungsabschnitt grundsätzlich durch seine reine Positionierung und Ausrichtung bereits eine Anzeigefunktion erzeugen kann, kann der Informationsabschnitt entweder in Form von Text, einer Winkeldarstellung und/oder einer Pfeildarstellung auch einen Informationsgehalt mit sich bringen, und auf diese Weise eine Ausrichtung und/oder Relativpositionierung für die Montage vorgeben. Auch eine Kombination von einem direkt wirkenden Ausrichtungsabschnitt sowie einem indirekt wirkenden Informationsabschnitt, ist im Rahmen der vorliegenden Erfindung selbstverständlich denkbar.

Ebenfalls von Vorteil ist es, wenn bei einem erfindungsgemäßen Folienprodukt die Vogelschutzposition des wenigstens einen UV-Vogelschutzabschnitts zumindest eine der folgenden Ausbildungsformen aufweist:
- Erstreckung des wenigstens einen UV-Vogelschutzabschnitts
- Ort des wenigstens einen UV-Vogelschutzabschnitts zu den Rändern des Folienkörpers
- Ort von wenigstens zwei UV-Vogelschutzabschnitten zueinander

Bei der voranstehenden Aufzählung handelt es sich um eine nicht abschließende Liste. Die Erstreckung wenigstens eines Vogelschutzabschnitts kann zum Beispiel eine längliche Erstreckung eines streifenförmigen UV-Vogelschutzabschnitts sein. Auch kann der Ort eines solchen UV-Vogelschutzabschnitts zu den Rändern als Relativposition angezeigt werden, beispielsweise zu welchem der beiden Ränder der jeweilige UV-Vogelschutzabschnitt näher benachbart angeordnet ist. Sind UV-Vogelschutzabschnitte in mehrfacher Weise, zum Beispiel in der bereits erläuterten streifenförmigen Ausbildung, angeordnet, so kann auch die Ausrichtung dieser Streifen und/oder der Abstand zwischen diesen Streifen Teil der Vogelschutzposition in der angezeigten Weise sein.

Ebenfalls Vorteile bringt es mit sich, wenn bei einem erfindungsgemäßen Folienprodukt eine Oberflächenseite des Folienkörpers mit einer Deckfolie, insbesondere zur Abdeckung einer Klebefläche dieser Oberflächenseite, versehen ist, wobei die Montagemarkierung zumindest teilweise in und/oder auf dieser Deckfolie angeordnet ist. Bevorzugt ist diese Ausführungsform, wenn dabei der Folienkörper frei von einer Montagemarkierung ausgebildet ist. Mit anderen Worten wird auf einer von dem Folienkörper separaten Deckfolie die Montagemarkierung angeordnet und auf diese Weise ist eine Entfernbarkeit der Montagemarkierung nach Beendigung der Montage oder sogar während der Montage möglich. Diese Deckfolie kann auch als Release Liner bezeichnet werden, wenn sie die Klebefläche in entsprechender Weise abdeckt. Sobald die Deckfolie entfernt ist und die Ausrichtung des Folienproduktes in der gewünschten Weise bei der Montage erfolgt ist, verschwindet durch das Entfernen der Deckfolie auch die Montagemarkierung. In der angeordneten Position an der Gebäudehülle ist somit die Montagemarkierung nicht mehr sichtbar und stört auf diese Weise auch nicht die Durchsicht durch den transparenten Teilabschnitt. Selbstverständlich ist diese Anordnung der Montagemarkierung auf einer Deckfolie auch mit anderen Anordnungen einer Montagemarkierung im Rahmen der vorliegenden Erfindung frei kombinierbar.

Ein weiterer Vorteil ist es, wenn bei einem erfindungsgemäßen Folienprodukt die Montagemarkierung Teil des Folienkörpers ist. Damit kann es sich um eine alternative oder zusätzliche Ausführungsform gemäß dem voranstehenden Absatz handeln. Bei dieser Ausführungsform ist die Montagemarkierung also in das Material des Folienkörpers integriert und/oder auf dem Folienkörper aufgedruckt. Dabei kann das Anbringen der Montagemarkierung bereits Teil eines Fertigungsverfahrens des Folienkörpers sein, sodass bei der Fertigung der UV-Vogelschutzabschnitte gleichzeitig oder zumindest im gleichen Fertigungsverfahren auch die Montagemarkierung gesetzt wird. Ein fehlerhaftes Setzen der Montagemarkierung, welches entsprechend zur fehlerhaften Montage führen würde, wird auf diese Weise mit hoher Sicherheit verhindert. Mit anderen Worten ist die Wahrscheinlichkeit einer falschen Bedruckung der Montagemarkierung auf ein Minimum reduziert. Die Montagemarkierung kann dabei zum Beispiel ein Teil des Klebstoffs zwischen einzelnen Folienschichten sein. Jedoch ist es auch möglich, durch entsprechende Auswahl von Pigmenten oder Farbstoffen die Integration in einen oder mehrere UV-Vogelschutzabschnitt(e) für die Montagemarkierung vorzusehen. Auch fluoreszierende Montagemarkierungen sind hier grundsätzlich denkbar, deren grundsätzliche Sichtbarkeit unter Einfluss von Tageslicht während der Montage unter entsprechender Nutzung einer Beleuchtungseinrichtung, zum Beispiel einer UV Lampe, für den Monteur verbessert werden können.

Ein weiterer Vorteil ist es, wenn bei einem erfindungsgemäßen Folienprodukt gemäß dem voranstehenden Absatz die Montagemarkierung, insbesondere der wenigstens eine Ausrichtungsabschnitt, eine temporäre Wirkung im VIS-Bereich aufweist. Darunter ist zu verstehen, dass die Montagemarkierung nach einer gewissen Haltezeit ihre Wirkung im VIS-Bereich zumindest teilweise verliert. Beispielsweise kann dies durch ein Verblassen unter UV-Lichteinwirkung für die Montagemarkierung erzielt werden. Die Montagemarkierung ist dabei im aufgewickelten oder aufgerollten Zustand des Folienproduktes vom Folienprodukt selbst gegen die Einwirkung von Sonnenlicht und damit gegen die Einwirkung von UV-Strahlen im Wesentlichen gesichert. Bei der Anbringung wird das Folienprodukt von der Rolle abgerollt und die Montagemarkierung durch das Abrollen sichtbar. Sobald die Montage erfolgt ist, ist die Montagemarkierung auf dem transparenten Teilabschnitt der Gebäudehülle nun den Elementen ausgesetzt und insbesondere auch der Einwirkung von Sonnenlicht. Ist nun für die Montagemarkierung ein Farbstoff ausgewählt, welcher durch UV-Einstrahlung ausbleicht, so kann die Montagemarkierung ihre temporäre Wirkung im VIS-Bereich durch ein langsames Verblassen reduzieren. Mit anderen Worten ist die Montagemarkierung für die Montage gegeben und verblasst über eine definierte Markierungszeit, indem die temporäre Wirkung nachlässt. Eine Integration in die Folie bringt damit eine erhöhte Sichtbarkeit mit sich und verhindert trotzdem eine unterwünschte Beeinträchtigung der Optik des Folienprodukts nach der Anordnung an der Gebäudehülle und nach Ablauf des Verblassens.

Vorteile bringt es ebenfalls mit sich, wenn bei einem erfindungsgemäßen Folienprodukt die Montagemarkierung fortlaufend und/oder sich wiederholend ausgebildet ist. Wie bereits erläutert worden ist, können Folienprodukte insbesondere auf Rollen angeordnet sein. Dies führt dazu, dass je nach gewünschter Länge und je nach unterschiedlicher Größe des Teilabschnitts der Gebäudehülle die gewünschte Länge des Folienprodukts abgeschnitten werden kann. Dadurch, dass bei dieser Ausführungsform nicht nur eine Montagemarkierung, sondern eine fortlaufende oder sich wiederholende Markierung vorgesehen ist, kann für alle unterschiedlichen Montagesituationen der Vorteil der Markierung der Montagerichtung und der Anzeige der Vogelschutzposition erzielt werden.

Ein weiterer Vorteil kann es sein, wenn bei einem erfindungsgemäßen Folienprodukt der wenigstens eine Ausrichtungsabschnitt eine Sichtbarkeit am Rand des für den Menschen sichtbaren Spektrums, zum UV-Bereich hin, aufweist, insbesondere im Bereich zwischen 5 und 20 Nanometern Abstand zum UV-Bereich. Mit anderen Worten ist hier der Ausrichtungsabschnitt nur ganz knapp für den Menschen sichtbar, da er sich sehr nahe am UV-Bereich befindet. Dadurch, dass je nach Literatur der UV-Bereich unterschiedlich definiert werden kann, befindet sich der Ausrichtungsabschnitt zum Beispiel im Bereich zwischen 405 und 425 Nanometern. Dies führt dazu, dass der Ausrichtungsabschnitt zwar grundsätzlich im VIS-Bereich für den Menschen sichtbar, aber nur in geringem Maße sichtbar ist. Mit anderen Worten tritt der Ausrichtungsabschnitt bei der normalen Einsichtnahme der Gebäudehülle in den Hintergrund, ist jedoch trotzdem noch für den Monteur in ausreichender Weise für die ausgerichtete und korrekte Montage sichtbar.

Weitere Vorteile können erzielt werden, wenn bei einem erfindungsgemäßen Folienprodukt die Montagemarkierung einen Herkunftsabschnitt zur Anzeige der Herkunft des Folienprodukts aufweist, welche insbesondere zumindest teilweise durch den Ausrichtungsabschnitt ausgebildet wird. Bevorzugt ist der Herkunftsabschnitt vollständig durch den Ausrichtungsabschnitt ausgebildet und kann zum Beispiel ein Logo oder Ähnliches aufweisen. Diese Ausrichtung ist immer sichtbar, sodass neben der richtigen Montage in korrekter Weise auch eine Qualitäts- und Funktionsanzeige durch den Herkunftsabschnitt gegeben ist. Damit kann nicht nur während der Montage die korrekte Anbringung des Folienprodukts gewährleistet werden, sondern auch nach der Montage die korrekte Anbringung und die damit einhergehende Funktionalität im Schutz gegen Vogelschlag angezeigt werden.

Weitere Vorteile kann es mit sich bringen, wenn bei einem erfindungsgemäßen Folienprodukt die Montagemarkierung, insbesondere der wenigstens eine Ausrichtungsabschnitt, nur von einer Seite des Folienkörpers sichtbar ist. Hier kann beispielsweise mit Polarisationsfiltern und/oder Strukturfarben gearbeitet werden, um eine nur einseitige Sichtbarkeit der Montagemarkierung zu erzielen. Dabei handelt es sich insbesondere um eine Sichtbarkeit von der Seite des Folienkörpers, welcher bei der Montage für den Monteur sichtbar ist. Dabei kann es sich zum Beispiel um eine Deckfolie auf der innenliegenden Seite handeln, wobei die Montagemarkierung durch das transparente Folienprodukt hindurch für den Monteur ersichtlich ist.

Vorteilhaft ist es weiter, wenn bei einem erfindungsgemäßen Folienprodukt die Vogelschutzposition des wenigstens einen Vogelschutzabschnitts eine Schnittzugabe beinhaltet, welche bei der Montage an der Gebäudehülle abgeschnitten wird. Wie bereits anfangs erläutert worden ist, kann bei breiten Gebäudehüllen ein direktes Aneinanderstoßen und damit ein benachbartes Montieren von Folienprodukten notwendig sein. Um ein spaltfreies Anbringen von zwei Folienprodukten nebeneinander auf Stoß zu ermöglichen, wird üblicherweise eine Überlappung zur Verfügung gestellt. Da, wie ebenfalls bereits erläutert, die geometrische Korrelation einen Teil der Schutzwirkung der UV-Vogelschutzabschnitte mit sich bringt, ist nun die Schnittzugabe in der Lage, diese bei der Anordnung der UV-Vogelschutzabschnitte im Folienkörper zu berücksichtigen. Mit anderen Worten wird berücksichtigt, dass beim Anbringen auf Stoß ein Teil des Folienkörpers wieder abgeschnitten wird, sodass in der Endposition, also nach dem Abschneiden der Schnittzugabe, wieder die gewünschte Relativpositionierung der UV-Vogelschutzabschnitte gegeben ist. Diese Schnittzugabe kann zum Beispiel für einen senkrechten Schnitt im Bereich zwischen 1 und 3 Zentimetern, beabstandet vom jeweiligen Rand des Folienkörpers, ausgebildet sein.

Bei einem Folienprodukt gemäß dem voranstehenden Absatz ist es vorteilhaft, wenn die Montagemarkierung, insbesondere als Teil des wenigstens einen Ausrichtungsabschnitts, die Schnittzugabe qualitativ und/oder quantitativ anzeigt. Darunter ist zu verstehen, dass nicht nur das Vorhandensein der Schnittzugabe in qualitativer Weise, sondern auch deren Abstand zum jeweiligen Rand, zum Beispiel in Zentimetern, angezeigt werden kann. Dabei wird der Grad einer notwendigen Überlappung optisch vorgegeben, sodass die Montage noch weiter erleichtert wird. Mit anderen Worten kann auf diese Weise die Montagemarkierung nicht nur die gewünschte Ausrichtung relativ zu einem anderen Folienprodukt, sondern auch die quantitative Ausrichtung einer Überlappung während des Montageverfahrens, wiedergeben.

Ebenfalls vorteilhaft kann es sein, wenn eine solche Montagemarkierung bei einem Folienprodukt gemäß der beiden voranstehenden Absätze zumindest teilweise, insbesondere vollständig oder im Wesentlichen vollständig, in der Schnittzugabe angeordnet ist. Dies führt dazu, dass nach dem Abschneiden der Schnittzugabe die Montagemarkierung ebenfalls mitabgeschnitten und damit entfernt wird. Wie bereits erläutert worden ist, ist es von Vorteil, möglichst wenig Einfluss im VIS-Bereich auf die Transparenz des Teilabschnitts der Gebäudehülle zu nehmen. Wird die Montagemarkierung mit der Schnittzugabe abgeschnitten, so kann sie nach der Beendigung der Montage keine Beeinträchtigung der Transparenz des Teilabschnitts mehr mit sich bringen.

Ebenfalls Gegenstand der vorliegenden Erfindung ist ein Verfahren für eine Anbringung eines Folienprodukts gemäß der vorliegenden Erfindung an einer Gebäudehülle, aufweisend die folgenden Schritte:
- Bestimmen der Vogelschutzposition des wenigstens einen UV-Vogelschutzabschnitts mithilfe des wenigstens einen Ausrichtungsabschnitts,
- Anordnen des Folienprodukts an der Gebäudehülle auf Basis der bestimmten Vogelschutzposition,
- Befestigen des Folienprodukts in der angeordneten Position.

Damit bringt ein erfindungsgemäßes Verfahren die gleichen Vorteile mit sich, wie sie ausführlich mit Bezug auf ein erfindungsgemäßes Folienprodukt erläutert worden sind. Die einzelnen Schritte des Verfahrens können dabei gleichzeitig, in der beschriebenen Reihenfolge, aber auch in anderer Reihenfolge, durchgeführt werden. Entscheidend ist hier, dass insbesondere auch ein Ausrichten und ein Relativpositionieren zur benachbarten, bereits angebrachten Folie alternativ oder in kombinierter Weise möglich sind.

Es kann von Vorteil sein, wenn bei einem erfindungsgemäßen Verfahren das Folienprodukt direkt angrenzend an ein bereits an der Gebäudehülle angebrachten Folienprodukt angebracht wird, insbesondere aufweisend die folgenden Schritte:
- Anordnen des Folienprodukts mit einem Überlappen über dem bereits angebrachten Folienprodukt,
- Abschneiden des Überlapp.

Hiermit ist ein benachbartes Anbringen auf Stoß gemeint, sodass der Überlapp insbesondere Teil einer Schnittzugabe ist, wie sie bereits erläutert worden ist. Dies führt dazu, dass entweder vor oder nach dem Abschneiden des Überlapps in der angeordneten Position das Folienprodukt nun auf Stoß angeklebt wird. Hier wird ein Vorteil erzielt, da ein spaltfreies Anbringen von Folienprodukten auf Stoß in erfindungsgemäßer Weise mit hoher Sicherheit in der richtigen Relativausrichtung der Folienprodukte zueinander gewährleistet werden kann.

Ein weiterer Gegenstand der vorliegenden Erfindung ist ein Fassadenelement für einen Teilabschnitt einer Gebäudehülle, insbesondere in Form eines Fensters und/oder eines Glaselements, aufweisend einen Fassadengrundkörper, welcher ein erfindungsgemäßes Folienprodukt aufweist. Die Montagemarkierung ist dabei Teil des Folienkörpers des Folienprodukts. Alternativ oder zusätzlich ist es auch möglich, die Montagemarkierung als Teil des Fassadenelementes und damit separat vom Folienkörper auszubilden. Das Fassadenelement kann dabei die Information über die Ausrichtung und insbesondere die Vogelschutzposition der UV-Vogelschutzabschnitte im Folienkörper beinhalten, sodass bei der Einbringung eines Fassadenelementes, zum Beispiel einer Glasscheibe, diese Ausrichtung in gleicher Weise berücksichtigt werden kann, wie es weiter oben mit Bezug auf die Anbringung des Folienproduktes an dem Teilabschnitt der Gebäudehülle erläutert worden ist.

Dabei kann das Fassadenelement als Arbeitsvorbereitung zum Beispiel am Boden vor einem Gebäude mit dem Folienprodukt beklebt werden und anschließend das fertig vormontierte Fassadenelement an der Fassade der Gebäudehülle angebracht werden. Alternativ oder zusätzlich kann der Folienkörper jedoch auch bereits bei der Fertigung des Fassadenelements, beispielsweise zwischen mehrere Glasscheiben, eingebracht werden. Damit bringt auch ein solches Fassadenelement die gleichen Vorteile mit sich, wie sie ausführlich mit Bezug auf ein erfindungsgemäßes Folienprodukt erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines erfindungsgemäßen Folienproduktes im UV-Bereich,
- Fig. 2: die Ausführungsform der Figur 1 im VIS-Beriech,
- Fig. 3: eine weitere Ausführungsform eines Folienproduktes im VIS-Bereich,
- Fig. 4: eine weitere Ausführungsform eines Folienprodukts im VIS-Bereich,
- Fig. 5: eine weitere Ausführungsform eines Folienproduktes im VIS-Bereich,
- Fig. 6: eine weitere Ausführungsform eines Folienproduktes im VIS-Bereich,
- Fig. 7: eine Relativpositionierung von zwei Folienprodukten im VIS-Bereich,
- Fig. 8: die Ausführungsform der Figur 7 im UV-Bereich,
- Fig. 9: eine Fehlausrichtung der Figur 7 im VIS-Bereich,
- Fig. 10: die Fehlausrichtung der Figur 9 im UV-Bereich,
- Fig. 11: eine Darstellung einer Schnittzugabe,
- Fig. 12: eine Ausbildung einer Gebäudehülle mit mehreren Fassadenelementen.

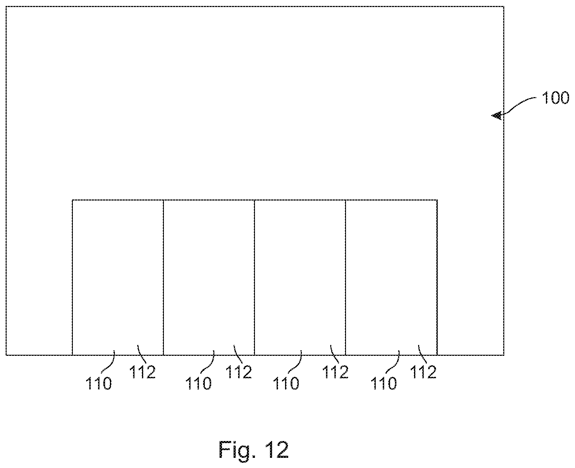

Erfindungsgemäß ist nun das Ziel, eine Gebäudehülle 100, wie sie die Figur 12 darstellt, mit einer Vogelschutzwirkung zu versehen. Die Gebäudehülle 100 der Figur 12 weist hier eine teilverglaste Fassade mit vier Fassadenelementen 110, die entweder bereits während der Fertigung der Fassadengrundkörper 112 mit einem erfindungsgemäßen Folienprodukt 10 versehen worden sind oder aber nachträglich, durch Aufkleben auf den einzelnen Fassadenelementen 110 als transparente Teilabschnitte mit einem Folienprodukt 10 gemäß der vorliegenden Erfindung bestückt werden, auf.

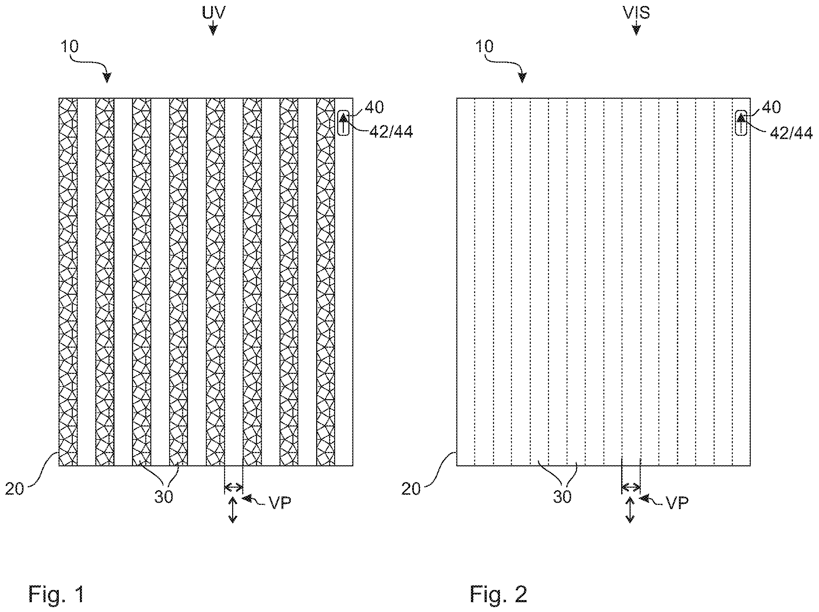

Die Figur 1 zeigt eine besonders einfache, aber die Erfindung nicht limitierende Möglichkeit, einer Vogelschutzfunktion. Um die Funktion zu verdeutlichen, zeigt die Figur 1 den UV-Bereich UV, also die Wahrnehmung, wie sie bei einem Vogel erzielt wird. Hier sind mehrere streifenförmige UV-Vogelschutzabschnitte 30 in einen Folienkörper 20 integriert, welcher das Folienprodukt 10 zur Verfügung stellt. Die Vogelschutzwirkung wird durch eine Vogelschutzposition VP der einzelnen Schutzabschnitte 30 ausgebildet, sodass die Vogelschutzposition VP hier die Erstreckungsrichtung, dargestellt durch den senkrechten Doppelpfeil, und die Spaltbreite zwischen benachbarten UV-Vogelschutzabschnitten 30, hier dargestellt durch den horizontalen Doppelpfeil, ausbildet. Oben rechts ist im Folienprodukt 10 eine Montagemarkierung 40 dargestellt. Diese enthält einen Ausrichtungsabschnitt 42, welcher hier einen pfeilförmigen Informationsabschnitt 44 darstellt. Es ist also gezeigt, dass der Pfeil nach oben darstellt, in welcher Richtung die Vogelschutzposition VP die einzelnen UV-Vogelschutzabschnitte 30 in ausgerichteter Weise enthält. Damit ist eine Informationsanzeige gegeben, welche auch im VIS-Bereich, wie ihn die Figur 2 zeigt, für den Monteur eine Information darstellt. Wie die Figur 2 darstellt, sind im VIS-Bereich die einzelnen UV-Vogelschutzabschnitte 30 nicht erkennbar. Sie sind hier nur der Übersichtlichkeit halber schematisch mit gestrichelten Linien dargestellt, wobei sich jedoch für den Monteur der Folienkörper 20 als einheitliche und nicht aufgeteilte Oberfläche darstellt. Im VIS-Bereich ist für ihn ausschließlich die Montagemarkierung 40 zu erkennen, sodass er nun weiß, in welcher Ausrichtung die UV-Vogelschutzabschnitte 30 vor ihm liegen, obwohl er sie nicht sehen kann.

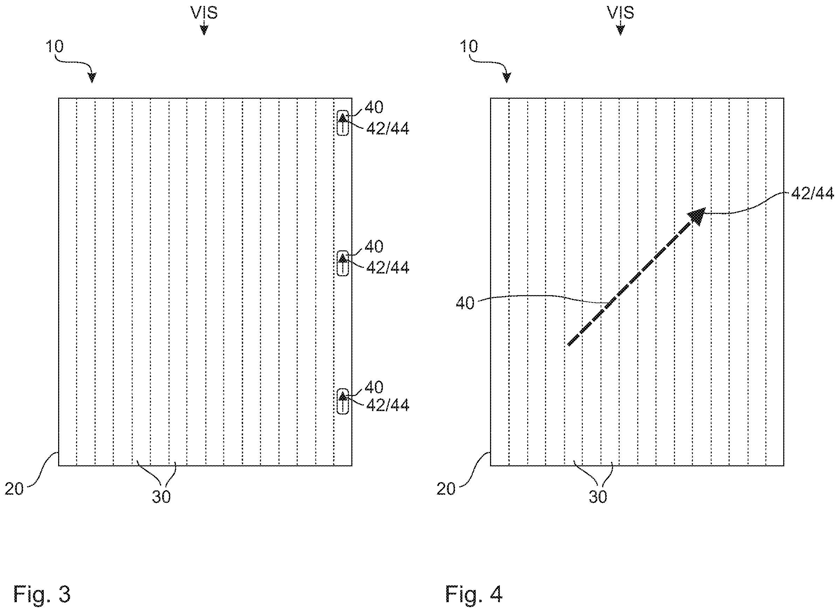

In der Figur 3 ist eine Weiterbildung eines solchen Folienproduktes 10 dargestellt. Da Folienprodukte 10 dieser Art häufig auf Rollen aufgerollt transportiert und für die Montage zur Verfügung gestellt werden, ist hier eine sich wiederholende Anbringung einer sich identisch wiederholenden Montagemarkierung 40 gegeben. Diese sind alle mit einem pfeilförmigen Informationsabschnitt als Ausrichtungsabschnitt 42 ausgebildet, wie er mit Bezug auf die Figuren 1 und 2 erläutert worden ist.

In der Figur 4 ist eine andere Variante dargestellt, welche in Form eines Wasserzeichens die Montagemarkierung 40 im Wesentlichen quer über den Folienkörper 20 darstellt. Der Ausrichtungsabschnitt 42 ist hier wieder als Pfeil mit einem Informationsabschnitt 44 versehen, welcher nach rechts oben zeigt und somit wieder in eindeutiger Weise die gewünschte Montageposition in Korrelation mit der Vogelschutzposition VP bringt. Ein solches Wasserzeichen ist insbesondere derart ausgestaltet, dass die Wirkung im VIS-Bereich auf einen temporären Verblassungszeitraum ausgelegt ist, sodass zum Beispiel durch Verwendung von UV-instabilen Farbstoffen in der Montagemarkierung, diese, nach der Anbringung an einer Gebäudehülle 100, mit der Zeit durch Sonneneinstrahlung verblasst und auf diese Weise mit der Zeit an Sichtbarkeit verliert.

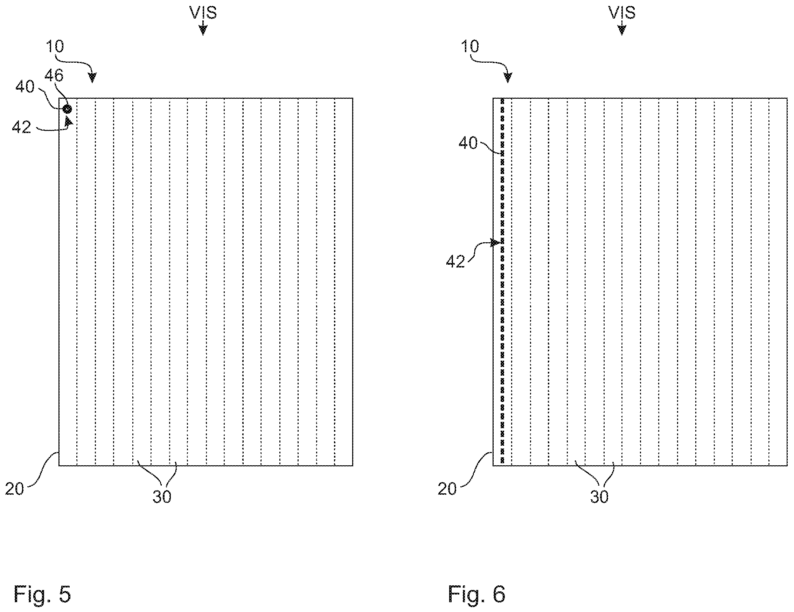

In der Figur 5 ist eine andere Ausführungsform der Montagemarkierung 40 dargestellt. Der Ausrichtungsabschnitt 42 ist hier mit einem Herkunftsabschnitt 46, schematisch hier als kreisförmiges Logo dargestellt, versehen. Hier ist nun kein Informationsabschnitt 44 gegeben, sondern die Information dadurch kodiert, dass die Montagemarkierung 40 immer oben links am Folienkörper 20 angeordnet sein soll. Hier wird sozusagen in indirekter Weise die Anzeige der Vogelschutzposition VP gegeben.

In der Figur 6 ist eine fortlaufende Ausbildung des Ausrichtungsabschnitts 42 der Montagemarkierung 40 gegeben. Diese korreliert insbesondere mit einer zusätzlichen Anzeige, nämlich der Anzeige einer später noch erläuterten Schnittzugabe SZ.

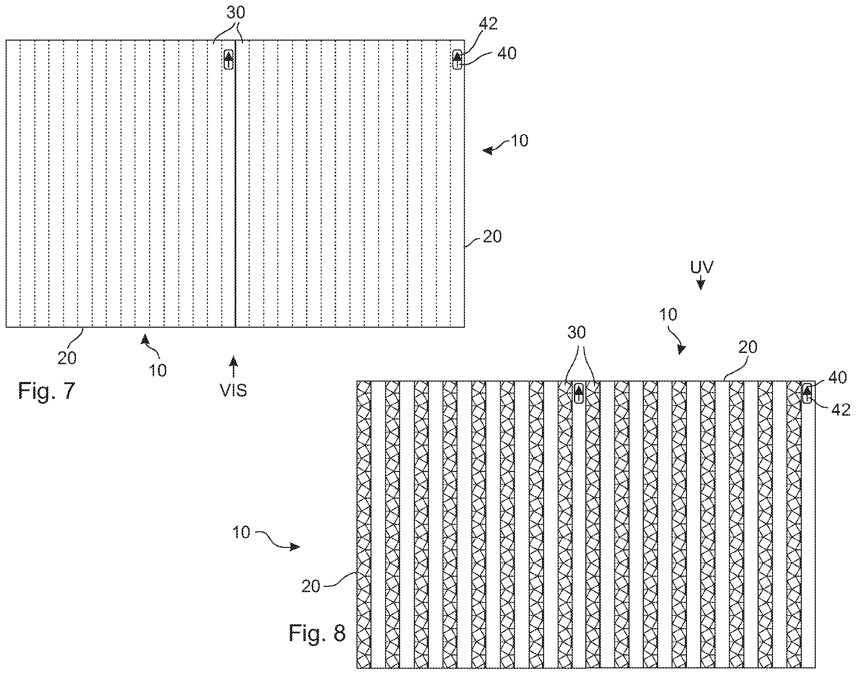

Anhand der Figuren 7 bis 10 wird kurz die Funktionsweise für die Montage erläutert. Diese ist insbesondere gut zu erkennen, wenn bei breiten Fassadenelementen 110 zwei oder mehr Folienprodukte 10 nebeneinander auf Stoß angeordnet werden sollen. Die Figur 7 zeigt dabei die korrekte Anordnung der beiden benachbarten Folienkörper 20 im VIS-Bereich und die Figur 8 die gleiche Situation im UV-Bereich. Wie hier gut zu erkennen ist, führt das rechte Folienprodukt 10 als Rapport die streifenförmige Musterausbildung der UV-Vogelschutzabschnitte 30 des linken Folienproduktes 10 nahtlos fort. Dies wurde gewährleistet, da der Monteur im VIS-Bereich durch die Montagemarkierungen 40 beider Folienprodukte 10 diese gewünschte Relativkorrelation in der Anordnung berücksichtigen konnte.

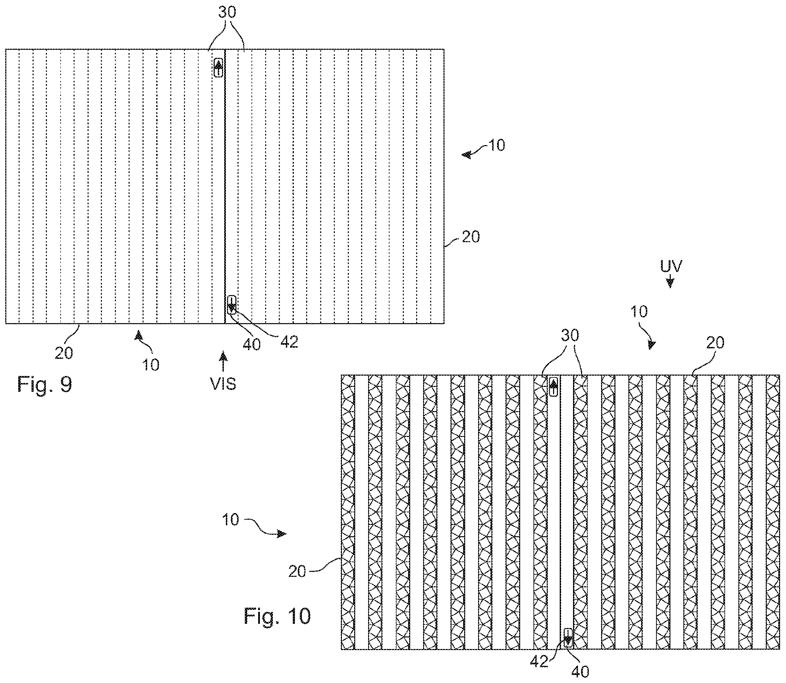

Die Figuren 9 und 10 zeigen die gleiche Situation, jedoch mit inkorrekter und damit falscher Relativausrichtung der Folienprodukte 10 zueinander. Dies wäre dann der Fall, wenn, dargestellt im UV-Bereich der Figur 10, nun das rechte Folienprodukt 10 um 180° gedreht inkorrekt angebracht ist. Dies führt dazu, dass der Rapport sich fehlerhaft zwischen den beiden Folienprodukten 10 ausbildet und sich am Stoß eine doppelt so breite und damit unerwünschte große Spaltbreite zwischen den angrenzenden UV-Vogelschutzabschnitten 30 ausbildet. Dies könnte dazu führen, dass diese größere Spaltbreite von Vögeln als Durchflugschneise wahrgenommen wird, sodass die Vogelschutzfunktion durch diese falsche Relativpositionierung deutlich minimiert werden. Dies wird jedoch dadurch vermieden beziehungsweise das Risiko einer solchen Fehlanordnung reduziert, da auch im VIS-Bereich, wie in Figur 9 dargestellt, durch die Relativpositionierung der beiden Montagemarkierungen 40, diese Fehlanordnung für den Monteur ersichtlich ist, sodass er diese Montage als fehlerhaft erkennen und vermeiden wird.

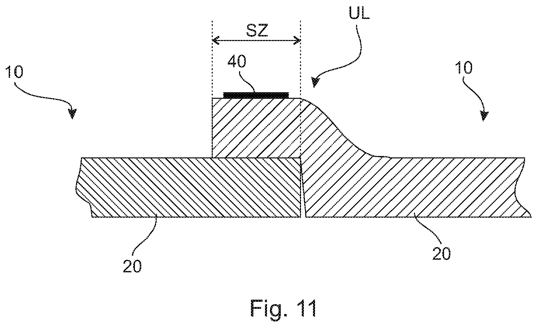

In der Figur 11 ist ein Detail für die Anordnung auf Stoß dargestellt, wie sie in den Figuren 7 bis 10 erläutert worden ist. Um ein spaltfreies Anordnen von Folienprodukten 10 nebeneinander zu ermöglichen, wird hier bei der Montage eine Überlappung UL ausgebildet, welche anschließend, vorzugsweise nach dem Fertigstellen der Klebeverbindung zur Gebäudehülle 100, abgeschnitten wird. Dies wird hier als Schnittzugabe SZ bezeichnet und ist insbesondere bei der Ausbildung der geometrischen Korrelation der UV-Vogelschutzabschnitte 30 und damit bei der Ausbildung der Vogelschutzposition VP berücksichtigt. Bei der Ausführungsform der Figur 11 ist ein weiterer Vorteil, dass die Montagemarkierung 40 hier in die Schnittzugabe SZ integriert ist, sodass durch Abschneiden als letzten Montageschritt des Überlapps UL die Montagemarkierung 40 als Teil der Schnittzugabe SZ vom Folienprodukt 10 entfernt wird. Nach diesem letzten Schritt ist also keine Montagemarkierung 40 mehr enthalten und auch nicht mehr als Beeinträchtigung im Folienkörper 20 beinhaltet.

Die Figur 12 zeigt die fertige Ausbildung, bei welcher die Fassadenelemente 110 mit ihren Fassadengrundkörpern die Folienprodukte 10 enthalten und damit das Gebäude beziehungsweise die Gebäudehülle 100 mit der gewünschten Vogelschutzfunktion versehen ist.

### Bezugszeichenliste

- 10: Folienprodukt
- 20: Folienkörper
- 30: UV-Vogelschutzabschnitt
- 40: Montagemarkierung
- 42: Ausrichtungsabschnitt
- 44: Informationsabschnitt
- 46: Herkunftsabschnitt

- 100: Gebäudehülle
- 110: Fassadenelement
- 112: Fassadengrundkörper

- VP: Vogelschutzposition
- SZ: Schnittzugabe
- UL: Überlapp

- UV: UV-Bereich
- VIS: VIS-Bereich

## Patentansprüche

1. Folienprodukt (10) zur Anbringung an einer Gebäudehülle (100), insbesondere einem transparenten Teilabschnitt der Gebäudehülle (100), zum Schutz gegen Vogelschlag, aufweisend einen Folienkörper (20) mit einer flächigen Erstreckung, wobei der Folienkörper (20) wenigstens einen UV-Vogelschutzabschnitt (30) mit einer optischen Wirkung im UV-Bereich (UV) als UV-Vogelschutzfunktion aufweist, wobei der wenigstens eine UV-Vogelschutzabschnitt (30) bezogen auf den Folienkörper (20) eine Vogelschutzposition (VP) aufweist, weiter aufweisend wenigstens eine Montagemarkierung (40) mit einer optischen Wirkung im für den Menschen sichtbaren VIS-Bereich (VIS), wobei die Montagemarkierung (40) wenigstens einen Ausrichtungsabschnitt (42) aufweist, welcher die Vogelschutzposition (VP) von wenigstens einem UV-Vogelschutzabschnitt (30) im VIS-Bereich (VIS) anzeigt.

2. Folienprodukt (10) nach Anspruch 1, **dadurch gekennzeichnet, dass** der Ausrichtungsabschnitt (42) eine Ausrichtung und/oder eine Position aufweist, welche mit der Ausrichtung des wenigstens einen UV-Vogelschutzabschnitts (30) korreliert, insbesondere entlang der Ausrichtung des wenigstens einen UV-Vogelschutzabschnitts (30) ausgerichtet ist und/oder zumindest teilweise mit der Vogelschutzposition (VP) übereinstimmt.

3. Folienprodukt (10) nach einem der vorangegangenen Ansprüche, **dadurch gekennzeichnet, dass** der wenigstens eine Ausrichtungsabschnitt (42) einen Informationsabschnitt (44) aufweist, welcher eine visuelle Information über die Vogelschutzposition (VP) aufweist.

4. Folienprodukt (10) nach einem der vorangegangenen Ansprüche, **dadurch gekennzeichnet, dass** die Vogelschutzposition (VP) des wenigstens einen UV-Vogelschutzabschnitts (30) zumindest eine der folgenden Ausbildungsformen aufweist:
- Erstreckung des wenigstens einen UV-Vogelschutzabschnitts (30)
- Ort des wenigstens einen UV-Vogelschutzabschnitts (30) zu den Rändern des Folienkörpers (20)
- Ort von wenigstens zwei UV-Vogelschutzabschnitten (30) zueinander

5. Folienprodukt (10) nach einem der vorangegangenen Ansprüche, **dadurch gekennzeichnet, dass** eine Oberflächenseite des Folienkörpers (20) mit einer Deckfolie, insbesondere zur Abdeckung einer Klebefläche dieser Oberflächenseite, versehen ist, wobei die Montagemarkierung (40) zumindest teilweise in und/oder auf dieser Deckfolie angeordnet ist.

6. Folienprodukt (10) nach einem der vorangegangenen Ansprüche, **dadurch gekennzeichnet, dass** die Montagemarkierung (40) Teil des Folienkörpers (20) ist, wobei vorzugsweise die Montagemarkierung (40) fortlaufend und/oder sich wiederholend ausgebildet ist.

7. Folienprodukt (10) nach Anspruch 6, **dadurch gekennzeichnet, dass** die Montagemarkierung (40), insbesondere der wenigstens eine Ausrichtungsabschnitt (42), eine temporäre Wirkung im VIS-Bereich (VIS) aufweist, und/oder die Montagemarkierung (40), insbesondere der wenigstens eine Ausrichtungsabschnitt (42), nur von einer Seite des Folienkörpers (20) sichtbar ist.

8. Folienprodukt (10) nach einem der vorangegangenen Ansprüche, **dadurch gekennzeichnet, dass** der wenigstens eine Ausrichtungsabschnitt (42) eine Sichtbarkeit am Rand des für den Menschen sichtbaren Spektrums zum UV-Bereich (UV) hin aufweist, insbesondere im Bereich zwischen 5 und 20nm Abstand zum UV-Bereich (UV).

9. Folienprodukt (10) nach einem der vorangegangenen Ansprüche, **dadurch gekennzeichnet, dass** die Montagemarkierung (40) einen Herkunftsabschnitt (46) zur Anzeige der Herkunft des Folienprodukts (10) aufweist, welcher insbesondere zumindest teilweise durch den Ausrichtungsabschnitt (42) ausgebildet wird.

10. Folienprodukt (10) nach einem der vorangegangenen Ansprüche, **dadurch gekennzeichnet, dass** die Vogelschutzposition (VP) des wenigstens einen UV-Vogelschutzabschnitts (30) eine Schnittzugabe (SZ) beinhaltet, welche bei der Montage an der Gebäudehülle (100) abgeschnitten wird.

11. Folienprodukt (10) nach Anspruch 10, **dadurch gekennzeichnet, dass** die Montagemarkierung (40), insbesondere als Teil des wenigstens einen Ausrichtungsabschnitts (42), die Schnittzugabe (SZ) qualitativ und/oder quantitativ anzeigt.

12. Folienprodukt (10) nach einem der Ansprüche 10 oder 11, **dadurch gekennzeichnet, dass** die Montagemarkierung (40) zumindest teilweise in der Schnittzugabe (SZ) angeordnet ist.

13. Verfahren für eine Anbringung eines Folienprodukts (10) mit den Merkmalen eines der Ansprüche 1 bis 12 an einer Gebäudehülle (100), aufweisend die folgenden Schritte:
- Bestimmen der Vogelschutzposition (VP) des wenigstens einen UV-Vogelschutzabschnitts (30) mithilfe des wenigstens einen Ausrichtungsabschnitts (42),
- Anordnen des Folienprodukts (10) an der Gebäudehülle (100) auf Basis der bestimmten Vogelschutzposition (VP),
- Befestigen des Folienprodukts (10) in der angeordneten Position.

14. Verfahren nach Anspruch 13, **dadurch gekennzeichnet, dass** das Folienprodukt (10) direkt angrenzend an einem bereits an der Gebäudehülle (100) angebrachten Folienprodukt (10) angebracht wird, insbesondere aufweisend die folgenden Schritte:
- Anordnen des Folienprodukts (10) mit einem Überlapp (UL) über dem bereits angebrachten Folienprodukt (10),
- Abschneiden des Überlapp (UL).

15. Fassadenelement (110) für einen Teilabschnitt einer Gebäudehülle (100), insbesondere in Form eines Fensters oder eines Glaselements, aufweisend einen Fassadengrundkörper (112), welcher ein Folienprodukt (10) mit den Merkmalen eines der Ansprüche 1 bis 12 aufweist, wobei die Montagemarkierung (40) Teil des Folienkörpers (10) des Folienprodukts (10) ist.

## Claims

1. Film product (10) for application to a building envelope (100), in particular a transparent partial section of the building envelope (100), for protection against bird impact, comprising a film body (20) with a planar extension, wherein the film body (20) has at least one UV bird protection section (30) with an optical effect in the UV range (UV) as a UV bird protection function, wherein the at least one UV bird protection section (30) has a bird protection position (VP) in relation to the film body (20), further having at least one installation marking (40) with an optical effect in the VIS range (VIS) visible to humans, wherein the installation marking (40) has at least one orientation section (42) indicating the bird protection position (VP) of the at least one UV bird protection section (30) in the VIS range (VIS).

2. Film product (10) according to claim 1, **characterised in that** the orientation section (42) has an orientation and/or a position that correlates with the orientation of the at least one UV bird protection section (30), in particular being aligned along the orientation of the at least one UV bird protection section (30), and/or at least partially corresponds to the bird protection position (VP).

3. Film product (10) according to one of the preceding claims, **characterised in that** the at least one orientation section (42) has an information section (44) which includes visual information about the bird protection position (VP).

4. Film product (10) according to one of the preceding claims, **characterised in that** the bird protection position (VP) of the at least one UV bird protection section (30) takes at least one of the following forms:
- extension of the at least one UV bird protection section (30)
- location of the at least one UV bird protection section (30) in relation to the edges of the film body (20)
- location of at least two UV bird protection sections (30) in relation to each other.

5. Film product (10) according to one of the preceding claims, **characterised in that** a surface side of the film body (20) is provided with a cover film, in particular to cover an adhesive surface of this surface side, wherein the installation marking (40) is at least partially arranged in and/or on this cover film.

6. Film product (10) according to one of the preceding claims, **characterised in that** the installation marking (40) is part of the film body (20), wherein the installation marking (40) is preferably continuous and/or repetitive in design.

7. Film product (10) according to claim 6, **characterised in that** the installation marking (40), in particular the at least one orientation section (42), has a temporary effect in the VIS range (VIS), and/or the installation marking (40), in particular the at least one orientation section (42), is only visible from one side of the film body (20).

8. Film product (10) according to one of the preceding claims, **characterised in that** the at least one orientation section (42) is visible at the edge of the spectrum visible to humans, towards the UV range (UV), in particular in the range between 5 and 20 nm distance from the UV range (UV).

9. Film product (10) according to one of the preceding claims, **characterised in that** the installation marking (40) has an origin section (46) indicating the origin of the film product (10) which is in particular at least partly formed by the orientation section (42).

10. Film product (10) according to one of the preceding claims, **characterised in that** the bird protection position (VP) of the at least one UV bird protection section (30) includes a trimming offset (SZ) which is trimmed off when installing on the building envelope (100).

11. Film product (10) according to claim 10, **characterised in that** the installation marking (40), in particular as part of the at least one orientation section (42), indicates the trimming offset (SZ) qualitatively and/or quantitatively.

12. Film product (10) according to one of the claims 10 or 11, **characterised in that** the installation marking (40) is at least partly arranged in the trimming offset (SZ).

13. Method for applying a film product (10) having the features of one of the claims 1 to 12 to a building envelope (100), comprising the following steps:
- determining the bird protection position (VP) of the at least one UV bird protection section (30) with the aid of the at least one orientation section (42),
- arranging the film product (10) on the building envelope (100) on the basis of the determined bird protection position (VP),
- affixing the film product (10) in the arranged position.

14. Method according to claim 13, **characterised in that** the film product (10) is applied directly adjacent to a film product (10) already applied to the building envelope (100), comprising in particular the following steps:
- arranging the film product (10) with an overlap (UL) over the film product (10) already applied,
- trimming off the overlap (UL).

15. Façade element (110) for a partial section of a building envelope (100), in particular in the form of a window or a glass element, comprising a façade base body (112) having a film product (10) with the features of one of the claims 1 to 12, wherein the installation marking (40) is part of the film body (10) of the film product (10).

## Revendications

1. Produit de film (10) destiné à être appliqué sur une enveloppe de bâtiment (100), en particulier sur une section transparente de l'enveloppe de bâtiment (100), afin de la protéger contre les impacts d'oiseaux, comprenant un produit de film (20) s'étendant à plat, le produit de film (20) comportant au moins une section de protection anti-oiseaux résistante aux UV (30) avec un effet optique dans la plage UV (UV) servant de protection anti-oiseaux résistante aux UV, dans laquelle ladite au moins une section de protection anti-oiseaux résistante aux UV (30) comporte une position de protection anti-oiseaux (VP) par rapport au produit de film (20), comprenant en outre au moins un repère de montage (40) avec un effet optique dans la plage du spectre VIS (VIS) visible par l'homme, le repère de montage (40) présentant au moins une section d'alignement (42) qui indique la position de protection anti-oiseaux (VP) d'au moins une section de protection anti-oiseaux résistante aux UV (30) dans la plage du spectre VIS (VIS).

2. Produit de film (10) selon la revendication 1, **caractérisé en ce que** la section d'alignement (42) présente un alignement et/ou une position en corrélation avec l'alignement de ladite au moins une section de protection anti-oiseaux résistante aux UV (30), en particulier alignée le long de l'orientation de ladite au moins une section de protection anti-oiseaux résistante aux UV (30) et/ou coïncide au moins partiellement avec la position de protection anti-oiseaux (VP).

3. Produit de film (10) selon l'une des revendications précédentes, **caractérisé en ce qu'**au moins une section d'alignement (42) comporte une section d'information (44) qui comporte une information visuelle sur la position de protection anti-oiseaux (VP).

4. Produit de film (10) selon l'une des revendications précédentes, **caractérisé en ce que** la position de protection anti-oiseaux (VP) d'au moins une section anti-oiseaux résistante aux UV (30) présente au moins l'une des formes suivantes :
- Extension d'au moins une section anti- oiseaux résistante aux UV (30)
- Emplacement d'au moins une section de protection anti-oiseaux résistante aux UV (30) sur les bords du produit de film (20)
- Emplacement d'au moins deux sections de protection anti-oiseaux résistante aux UV (30) l'une par rapport à l'autre.

5. Produit de film (10) selon l'une des revendications précédentes, **caractérisé en ce qu'**un côté de surface du corps de film (20) est muni d'un film de recouvrement, en particulier pour recouvrir une surface adhésive de ce côté de surface, le repère de montage (40) étant disposé au moins partiellement dans et/ou sur ce film de recouvrement.

6. Produit de film (10) selon l'une des revendications précédentes, **caractérisé en ce que** le repère de montage (40) fait partie du corps de film (20), le repère de montage (40) étant conçu de préférence de manière continue et/ou répétitive.

7. Produit de film (10) selon la revendication 6, **caractérisé en ce que** le repère de montage (40), en particulier ladite au moins une section d'alignement (42) présente un effet temporaire dans la plage du spectre VIS (VIS), et/ou le repère de montage (40), en particulier ladite au moins une section d'alignement (42), n'est visible que d'un seul côté du corps de film (20).

8. Produit de film (10) selon l'une des revendications précédentes, **caractérisé en ce que** ladite au moins une section d'alignement (42) présente une visibilité à la limite du spectre visible par l'œil humain vers la plage UV (UV), en particulier dans la plage comprise entre 5 et 20 nm de distance par rapport à la plage UV (UV).

9. Produit de film (10) selon l'une des revendications précédentes, **caractérisé en ce que** le repère de montage (40) présente une section d'origine (46) pour indiquer l'origine du produit de film (10) qui est notamment formée au moins partiellement par la section d'alignement (42).

10. Produit de film (10) selon l'une des revendications précédentes, **caractérisé en ce que** la position de protection anti-oiseaux (VP) de ladite au moins une section de protection anti-oiseaux résistante aux UV comprend une marge de coupe (SZ) qui est coupée lors du montage sur l'enveloppe de bâtiment (100).

11. Produit de film (10) selon la revendication 10, **caractérisé en ce que** le repère de montage (40), en particulier en tant que partie d'au moins une section d'alignement (42), indique qualitativement et/ou quantitativement la marge de coupe (SZ).

12. Produit de film (10) selon l'une des revendications 10 ou 11, **caractérisé en ce que** le repère de montage (40) est disposé au moins partiellement dans la marge de coupe (SZ).

13. Procédé pour une pose d'un produit de film (10) présentant les caractéristiques de l'une des revendications 1 à 12 sur une enveloppe de bâtiment (100), comprenant les étapes suivantes :
- détermination de la position de protection anti-oiseaux (VP) de ladite au moins une section de protection anti-oiseaux (30) à l'aide de ladite au moins une section d'alignement (42),
- Disposition du produit de film (10) sur l'enveloppe de bâtiment (100) sur la base de la position de protection anti-oiseaux (VP) déterminée,
- Fixation du produit de film (10) dans la position prévue.

14. Procédé selon la revendication 13, **caractérisé en ce que** le produit de film (10) est appliqué directement à côté d'un produit de film (10) déjà appliqué sur l'enveloppe de bâtiment (100), comprenant en particulier les étapes suivantes :
- Disposition du produit de film (10) avec un rabat supérieur (UL) au-dessus du produit de film (10) déjà appliqué,
- Découpe du rabat supérieur (UL).

15. Élément de façade (110) pour une section d'une enveloppe de bâtiment (100), en particulier sous la forme d'une fenêtre ou d'un élément en verre, comprenant un corps de base de façade (112) qui comprend un produit de film (10) présentant les caractéristiques de l'une des revendications 1 à 12, le repère de montage (40) faisant partie du corps de film (10) du produit de film (10).
